# EUROPEAN PATENT SPECIFICATION

(11) **EP 4 381 298 B1**
(45) Date of publication and mention of the grant of the patent: **29.04.2026**
(21) Application number: 22757367.2
(22) Date of filing: 04.08.2022
(51) Int. Cl.: G01N 35/00, G01N 35/10

(54) **APPARATUS FOR THE AUTOMATED PIPETTING AND RELATED PROCESS**
VORRICHTUNG ZUM AUTOMATISCHEN PIPETTIEREN UND ZUGEHÖRIGES VERFAHREN
APPAREIL POUR PIPETAGE AUTOMATISÉ ET PROCÉDÉ ASSOCIÉ

(30) Priority: 06.08.2021 IT 202100021488
(43) Date of publication of application: 12.06.2024
(73) Proprietor: Inpeco SA, 6883 Novazzano (CH)
(72) Inventor: PEDRAZZINI, Mr. Gianandrea, 6900 Paradiso (CH); GIURI, Eros, 10040 Val della Torre (Torino) (IT); BACCHERETI, Michele, 10040 Val della Torre (Torino) (IT); CONTROZZI, Marco, 56127 Pisa (IT); MILIERI, Chiara, 56127 Pisa (IT); FANELLI, Francesco, 56127 Pisa (IT); PIPITONE, Francesco, 56127 Pisa (IT); GUACHI GUACHI, Robinson Gabriel, 56127 Pisa (IT); PIVA, Benedetta, 56127 Pisa (IT); CINI, Francesca, 56127 Pisa (IT); KABASHI, Burim, 56127 Pisa (IT); SICILIANI, Lorenza, 56127 Pisa (IT)
(74) Representative: Buzzi, Notaro & Antonielli d'Oulx S.p.A.
(86) International application number: PCT/IB2022/057243
(87) International publication number: WO 2023/012713

(56) References cited:
- US-A1- 2008 019 878

## Description

### Field of the invention

The present invention relates to an automated pipetting apparatus arranged to automatically aspirate, transfer and dispense a liquid, for example a biological sample or a reagent.

The term pipetting refers to pipettes - a laboratory instrument commonly used to complete transport operations of small quantities of liquid, even in the order of microliters.

Compared to conventional manual micro-pipettes, such fully automated equipment has the advantage of improving the speed of execution of liquid aspiration and release operations, increasing the repeatability of the operations performed, as well as precision and accuracy, and ensuring the traceability of the process.

### Prior art

**As described in document** US 2008/019878 A1**,** such automated equipment comprises a pipetting head, which includes the components necessary to transfer the liquid from a vessel - containing the liquid to be collected - to the head, and vice versa. Typically, pipetting heads can be multi-channel or single-channel. The necessary precision in positioning the pipetting head in the source and destination liquid vessel is obtained thanks to the use of multi-axis systems controlled by one or more actuators.

Liquid transfer occurs by aspirating the desired volume of liquid from a source vessel, transferring it to one or more destination vessels. The commonly used technique to aspirate or dispense the liquid is based on an air displacement, along at least one duct, within the pipetting head. This technique can be used in manual, semi-automated or fully automated pipetting equipment.

In accordance with the prior art, the air displacement can be generated by means of piston pumps, pressurized vacuum/air pumps or volumetric pumps.

According to what is described in document EP 3014283 B1, such equipment can comprise a flow sensor arranged to monitor pipetting operations by measuring the displaced air volumes, wherein the flow sensor is based on a measurement of the pressure gap along a duct within the pipetting head.

The present invention starts from the desire to propose an automated pipetting apparatus for an analysis laboratory, which overcomes various operating limits of the previously indicated prior art.

The main drawback of a solution including a precision syringe lies in the manufacturing complexity of the same with equal miniaturization. In fact, high accuracy and precision position sensors and various components with tight tolerances are necessary to realize the mechanical transmission and the syringe body. These requirements therefore involve, in addition to the high cost, a lower reliability and a degradation of performance in operation.

Regarding a solution based on a pressure drop flow sensor, the main limitation is the technology required to achieve a drop proportional to the flow in an acceptable range of pressures to be measured.

### Object of the invention

The main object of the present invention is to overcome the drawbacks of the known solutions.

In particular, an object of the present invention is to provide an automated pipetting apparatus, and a related process for aspiration and dispensing of a volume of liquid, which on the one hand maintains a high degree of reliability in terms of precision of the pipetting operations and the related repeatability, and on the other hand allows to significantly increase productivity compared to the conventional totally manual process.

A further object of the present invention is to increase the degree of traceability of the operations performed, the errors found and the performances obtained.

A further object of the present invention is to provide an apparatus and a related process of the aforementioned type which guarantees a high degree of safety against the risk of errors, concerning both the volume of aspirated/dispensed liquid and the control of the displacement of the pipetting head from a source vessel to a destination vessel.

A further object of the invention is to realize an apparatus and a related process of the aforementioned type which allows to obtain an extremely precise control of the volume of aspirated/dispensed liquid.

A further object of the invention is to provide an apparatus and a process of the aforementioned type which have a high degree of flexibility, in the sense of being able to operate with different types of liquids with different viscosities and in association with other automated equipment of an analysis laboratory.

Yet a further object of the invention is to achieve all the aforementioned objectives with relatively simple and relatively low cost means.

### Summary of the invention

In order to achieve one or more of the aforementioned objects, the invention relates to the features indicated in the attached claim 1.

The present invention also relates to the process which is carried out by means of the aforementioned apparatus.

Further features of the invention are indicated in the attached claims.

### Detailed description of preferred embodiments

Further features and advantages of the invention will be clear from the following description with reference to the attached drawings, provided purely by way of non-limiting example, in which:
- Figure 1 is a perspective view showing a preferred embodiment of the apparatus according to the invention;
- Figures 2A, 2B are respectively a front view and a sectional view on an enlarged scale which show different features of the invention;
- Figures 3A, 3B are a front view and a sectional view on an enlarged scale which show a further embodiment of the invention;
- Figure 3C is a front view on an enlarged scale showing further components of the invention;
- Figures 4A-4C show further features of the invention;
- Figure 5 shows an exemplary flow chart of a process according to the invention.

The following description illustrates various specific details aimed at a thorough understanding of examples of one or more embodiments. The embodiments can be made without one or more of the specific details, or with other methods, components, materials, etc. In other cases, known structures, materials or operations are not shown or described in detail to avoid obscuring various aspects of the embodiments. Reference to "an embodiment" within this description means that a particular configuration, structure or feature described in relation to the embodiment is included in at least one embodiment. Thus, phrases such as "in one embodiment", possibly present in different places in this description, do not necessarily refer to the same embodiment. Furthermore, particular conformations, structures or features can be suitably combined in one or more embodiments and/or associated with the embodiments in a different way from as illustrated here, so for example a feature exemplified here in relation to a figure can be applied to one or more embodiments exemplified in a different figure.

The references illustrated herein are for convenience only and therefore do not limit the scope of protection or the extent of the embodiments.

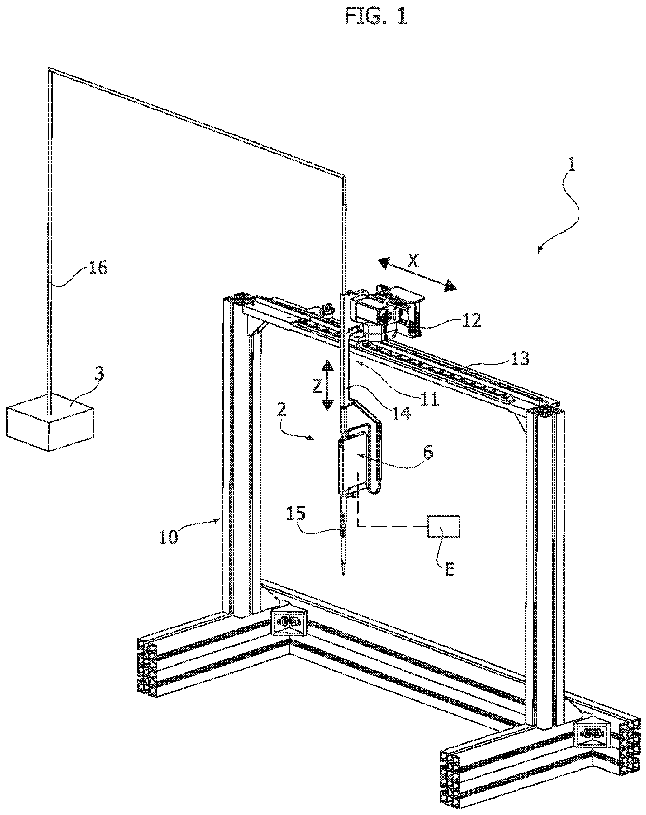

In Figure 1, reference 1 generally indicates a preferred embodiment of an automated pipetting apparatus, according to the present invention. The apparatus 1 is arranged to be used in an analysis laboratory, together with further automated laboratory equipment, such as further processing stations of the samples collected with the pipetting apparatus.

The apparatus 1 comprises pipetting means 2 configured to automatically aspirate and dispense a liquid, for example a biological sample or a reagent. The pipetting means 2 comprise at least one pipetting head 6 arranged to aspirate and/or dispense relatively small volumes of liquids, even in the order of microliters. The apparatus 1 comprises robotic means 11 configured to perform a relative displacement between the pipetting means 2 and a vessel (for example a test tube) containing the liquid to be aspirated and/or dispensed along at least one direction.

According to what is illustrated in Figure 1, the pipetting head 6 is connected to a supporting frame 10 through robotic means 11 arranged to move the pipetting head 6, in order to carry out the liquid transfer operations.

In accordance with the embodiment illustrated in Figure 1, the robotic means 11 comprise a carriage 12 slidably mounted on a guide 13, along a first direction X. The pipetting head 6 is connected to the carriage 12 by means of a robotic arm 14 arranged to allow the movement of the pipetting head 6 along a vertical direction Z substantially perpendicular to the aforementioned first direction X. The activation of the moving parts of the robotic means 11 can be carried out according to means known per se, such as for example a pair of electric actuators. It should therefore be noted that the pipetting means 2 are slidably mounted above a working platform on which a collection vessel containing the liquid to be aspirated (not shown in Figure 1) can be placed.

Naturally, the robotic means 11 may differ from what is described above and illustrated in Figure 1. For example, the pipetting head 6 can be slidingly mounted on an assembly of guides along two perpendicular directions X, Y, according to a general configuration substantially analogous to that of a cartesian robot. Alternatively, the pipetting head 6 can be mounted on a manipulator robot (for example of the cylindrical, spherical or SCARA type).

It should be noted that the pipetting apparatus 1 according to the invention comprises at least one electronic controller E (schematically illustrated in Figure 1) arranged to control the pipetting operations of the apparatus 1, as well as the movements of the pipetting head 6 along said at least one direction Z. According to the embodiment illustrated in Figure 1, the pipetting head 6 can be controlled by means of the electronic controller E, so as to position itself over a collection vessel containing a liquid to be aspirated, and then to be displaced vertically towards the liquid to be aspirated. Once the aspiration is completed, the pipetting head 6 is controlled by the electronic controller E to displace to a further destination vessel, in which to dispense the aspirated liquid.

According to the invention, the apparatus 1 comprises an air displacement system for aspirating and dispensing a determined volume of liquid, including a pressure and vacuum source 3 arranged to create the pressure necessary to carry out a dispensing operation and/or the vacuum condition to carry out an operation of aspiration of a volume of liquid.

The pressure and vacuum source 3 is connected to the pipetting head 6 by means of a pneumatic circuit including a first duct 16. As will be evident from the following description, the pneumatic circuit also comprises at least a second duct arranged within the pipetting head 6, to convey the air displacement generated by the pressure and vacuum source 3. Naturally, to allow the displacement of the pipetting head 6, the first duct 16 is a flexible duct which allows to carry out the displacement of the head 6 away from the source 3.

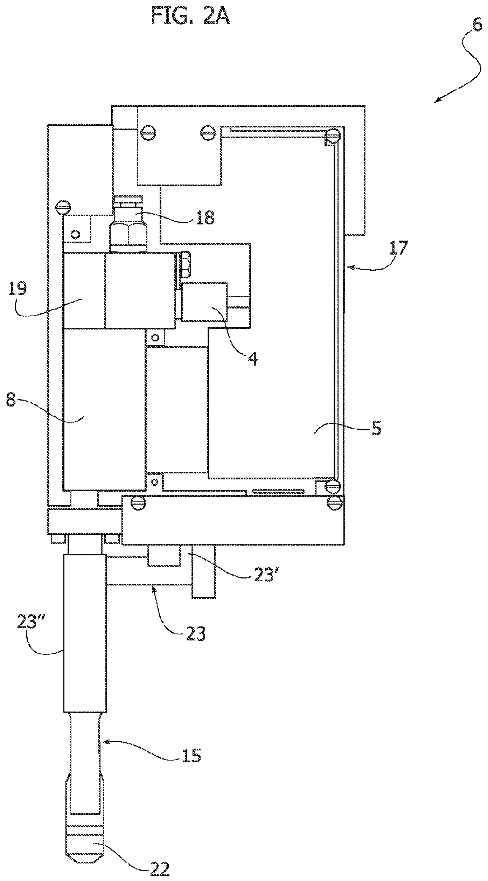

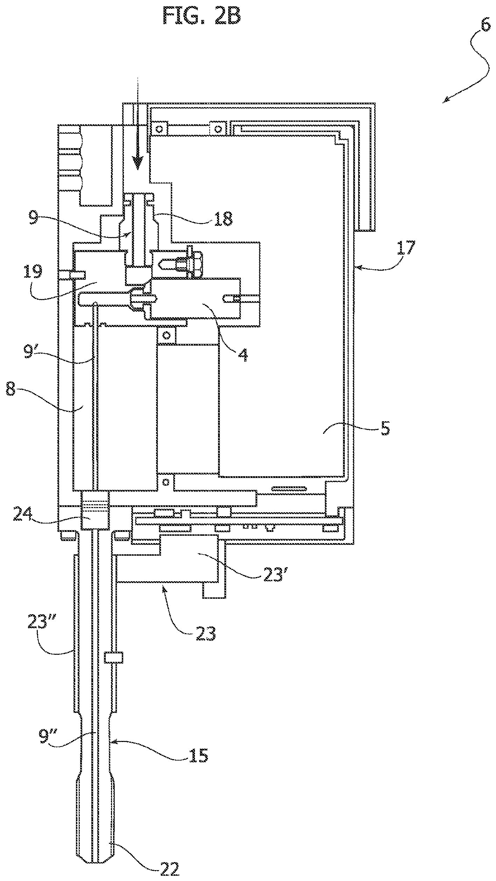

Figures 2A, 2B illustrate on an enlarged scale a pipetting head 6, according to an embodiment of the invention.

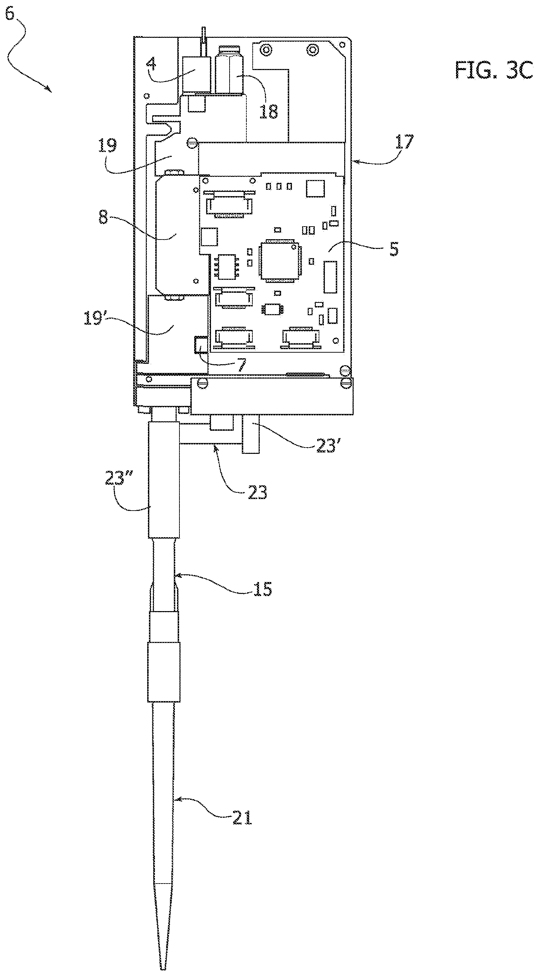

The pipetting head 6 comprises a casing 17, preferably parallelepiped-shaped, within which a plurality of components necessary to carry out the pipetting operations are mounted. A tip adapter element 15, protruding from the casing 17, comprises an end portion 22 arranged to perform the mounting - preferably by interference - of a pipetting tip 21 (shown in Figure 3C) on the tip adapter element 15. The pipetting tip 21 is arranged to contain the aspirated liquid, after the activation of the air displacement system to aspirate and dispense a determined volume of liquid. This pipetting tip 21 can be of the disposable type, with a certain capacity depending on the volumes of liquid to be aspirated, in order to be able to discard the tip at the end of a pipetting sequence, to eliminate any possibility of contamination.

As previously indicated, the automated pipetting apparatus 1 carries out the pipetting operations by means of an air displacement system comprising the pressure and vacuum source 3. Within the casing 17 of the head 6, an internal duct 9 is arranged to convey the air displacement generated by the pressure and vacuum source 3. The references 9 'and 9" indicate, respectively, a first portion of the internal duct 9 obtained within the casing 17, and a second portion of the internal duct 9 obtained within the tip adapter element 15. The end portion 22 includes an end orifice to allow the passage of air necessary for the displacement of the liquid within the tip 21, and the accumulation of the aspirated liquid.

Preferably, the apparatus 1 comprises an abutment element 23 having an upper portion 23' connected to the casing 17 and a lower portion 23" axially aligned and superimposed on an upper portion of the tip adapter element 15. The abutment element 23 is configured to slide along the axis of the tip adapter element 15 - in the direction of the casing 17 - when the tip 21 is mounted on the tip adapter element 15, so as to sight at least one optical sensor arranged within the casing 17 and thus provide a confirmation signal of correct mounting of the tip 21.

Still according to a preferred feature, the head 6 comprises an air filter 24 arranged to avoid contamination of the air during the aspiration operations.

As previously indicated, within the casing 17 of the head 6, an internal duct 9 is arranged to convey the air displacement generated by the pressure and vacuum source 3, so as to carry out the operations of aspiration and dispensing of liquid. The references 9' and 9" indicate, respectively, a first portion of the internal duct 9 obtained within the casing 17, and a second portion of the internal duct 9 obtained within the tip adapter element 15. With the reference 18 is indicated a connector arranged to connect the internal duct 9 to the first duct 16 and an intake manifold 19 including a portion of the aforementioned first portion of duct 9'.

According to the invention, a first solenoid valve 4 is arranged within the pipetting head 6 - in communication with the internal duct 9 -, configured to control the leakage or retention of the air flow introduced by the source 3. The first solenoid valve 4 is in the closed position when the source 3 is activated to pressurize the pneumatic circuit. Preferably, the first solenoid valve 4 is configured in a normally closed position. Still with reference to Figures 2A, 2B, the head 6 comprises a printed circuit board 5 (PCB) arranged to transmit a command signal for the opening of the first solenoid valve 4. According to a technique known per se, the first solenoid valve 4 comprises an opening and closing membrane element, which is raised or lowered to vary the pressure within a chamber, allowing the leakage or retention of the fluid introduced into the tip 21. This membrane element can be actuated by a solenoid which, traversed by electric current, attracts a ferrous core, thus causing the mechanical displacement of the occluding element of the solenoid valve 4, and therefore the opening or closing of the solenoid valve 4. With the opening of the first solenoid valve 4, the membrane element rises to allow the fluid to flow into the internal duct 9, in the portion 9' which is downstream of the first solenoid valve 4.

According to a relevant feature of the invention, the automated pipetting apparatus 1 comprises at least one flow sensor 8 arranged within the pipetting head 6 to detect the volume of aspirated/dispensed liquid by means of the pipetting tip 21. The flow sensor 8 is a MEMS (Micro Electro Mechanical System) thermal sensor based on a thermal detection principle which determines the deformation of a temperature profile generated by a heating element, in the presence of air flow, and detects the temperature gradient in the flow direction. The MEMS thermal sensor is a miniaturized sensor, sized to be integrated within the pipetting head 6, without negatively affecting the overall dimensions of the head. More specifically, the sensor is installed within the casing 17 of the head 6, in a position near the tip adapter element 15. Such position is particularly advantageous in terms of accuracy and repeatability on the handled volume. The miniaturization of the flow sensor 8 allows to make a head 6 of compact size, able to aspirate and dispense the liquid (biological sample, reagent, etc.) even in small-pitch containers, such as for example plates with a plurality of wells placed side by side with 9 mm interaxle spacing between one well and the other. These containers are provided by the SLAS (Society for Laboratory Automation and Screening) Standard. The small size of the head 6 including the miniaturized thermal sensor allow the simultaneous use of different pipetting heads - without hindering each other - to the advantage of a faster aspiration and dispensing process.

The operation of the apparatus 1, in accordance with the features described above, is as follows.

Initially, the printed circuit board 5 transmits an electric signal for opening the first solenoid valve 4, concurrently with the actuation of the source 3. After the reading of the deformation of the temperature profile, carried out by means of the flow sensor 8, the electronic controller E, programmed with retroactive control algorithms, uses the data collected by the flow sensor 8 to close the first solenoid valve 4, once the previously set volume of liquid to be aspirated/dispensed has been reached. The solenoid valve 4 is therefore in the open position for a certain period of time, determined as a function of the flow rate read by the flow sensor 8 and as a function of the volume to be aspirated/dispensed. In this regard, the apparatus 1 can comprise an HMI human-machine interface device, to carry out a preliminary programming of the apparatus, by entering various operating parameters, such as for example the type of liquid and the volume to be aspirated/dispensed. Therefore, according to the aforementioned specific configuration, the pressure and vacuum source 3 generates an air flow which flows through the first duct 16, an inlet section of the internal duct 9, the first solenoid valve 4, the flow sensor 8 which measures the flow rate of aspirated/dispensed liquid and the tip adapter element 15.

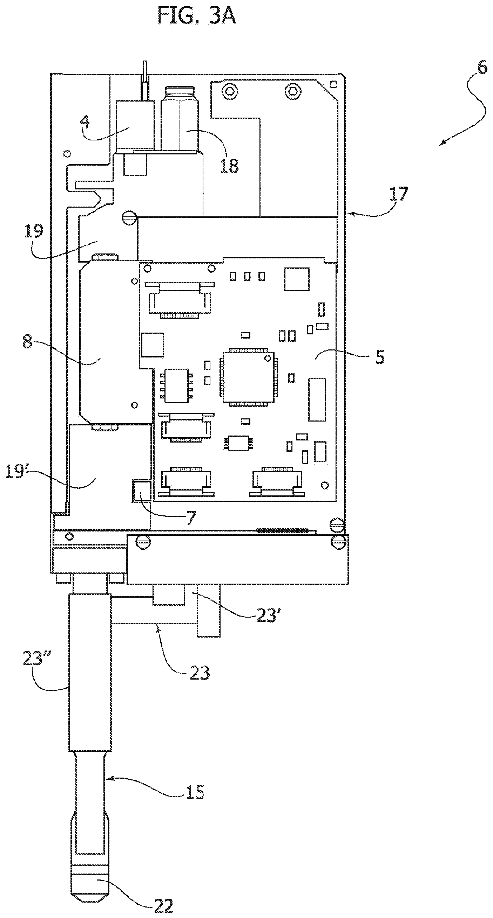

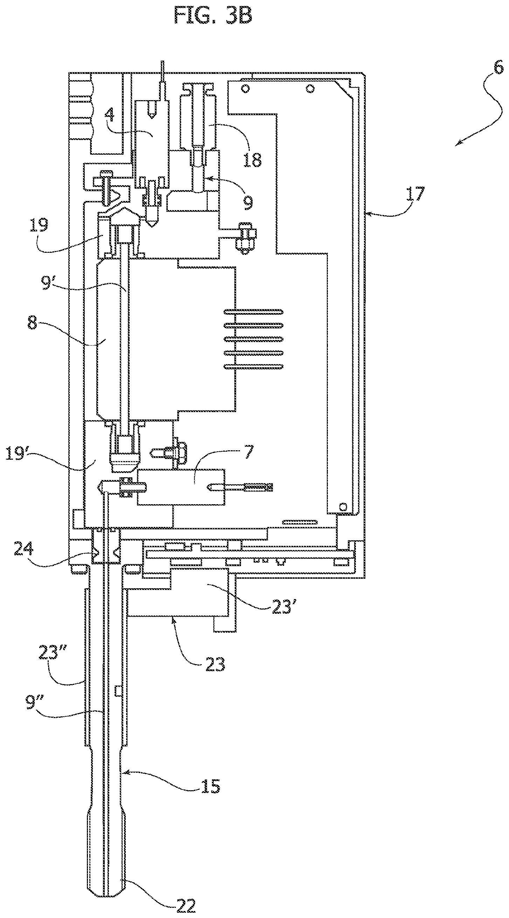

According to the embodiment illustrated in Figures 3A, 3B, exemplary of a further embodiment of the invention, the pipetting apparatus 1 comprises a second solenoid valve 7 arranged in the pipetting head 6, downstream of the first solenoid valve 4 and near the tip adapter element 15, so as to define a portion of the pneumatic circuit within the head 6, comprised between the first and the second solenoid valve 4,7.

The second solenoid valve 7 is configured in a normally closed position. The second solenoid valve 7 is switchable to collect liquid volumes in the order of microliters by exploiting the aforementioned portion of the pneumatic circuit comprised between the first solenoid valve 4 and the second solenoid valve 7 which - during operation - is at a certain pressure after the switching of the first solenoid valve 4. Thanks to this feature, it is performed an extremely precise control of the collection and dispensing operations of extremely little liquid volumes.

It should be noted that the second solenoid valve 7 can be made in a similar way to the first solenoid valve 4.

Still with reference to the embodiment illustrated in Figures 3A, 3B, a second intake manifold 19' is arranged in combination with the second solenoid valve 7 and with the portion 9" of internal duct 9 downstream of it.

As described in more detail below, the operation of the double solenoid valve configuration provides for the opening of the first solenoid valve 4, thus putting pressure on the portion of the pneumatic circuit comprised between the first solenoid valve 4 and the second solenoid valve 7. By closing the first solenoid valve 4 and by exploiting the volume of pneumatic circuit between the two solenoid valves, it is possible to switch the second solenoid valve 7 for very short times, of the scale of milliseconds (for example from 5 ms to 100 ms), thus making this portion of pneumatic circuit work as a constant volume micro-pump with a certain operating pressure.

The presence of the second solenoid valve 7 makes it possible to create a micro-pump with adjustable pressure, the benefits of which are:
- possibility of aspirating small liquid volumes with better performance than using a pipettor with a single solenoid valve and pressure source upstream of the pneumatic circuit;
- guaranteeing the necessary accuracy and precision in the case of different and independent pipetting of small volumes, using N pipetting heads connected to the same pressure source;
- possibility of using only a portion of the pneumatic circuit, making pipetting operations independent from eventual constructional differences between different pipettors, related to the duct between the two solenoid valves 4,7. In fact, the same operating point found on a pipettor can also be used for other pipettors, given that - considering the range of volumes with which the micro-pump is used - the dimensional differences of the channel do not impact on the operating point of the single pipettor. All this also results in the possibility of using the pipettor without preliminary calibration in said volume ranges.

Preferably, the apparatus 1 can comprise a pressure sensor (not shown in the drawings) arranged to read the pressure which is reached in the pneumatic circuit volume comprised between the two solenoid valves 4,7. The presence of a pressure sensor within the micro-pump allows to monitor the correct reaching of the desired pressure. Thanks to these features, the operating variables linked to the positioning of the source 3 at a certain distance from the pipetting tip 21 are eliminated, obtaining an extreme precision of the pipetting operations of volumes of liquid in the order of microliters, more particularly with volumes of liquid between 0.5 µl and 2 µl.

Naturally, in this embodiment with two solenoid valves, it is possible to operate as for the embodiment with a single solenoid valve, by opening the solenoid valves 4,7 and reading the information detected by the flow sensor 8, and then closing the solenoid valves 4,7 on reaching the previously set volume of aspirated/dispensed liquid.

Again with reference to the embodiment with two solenoid valves, a further operation (by implementing the micro-pump) is as follows:
having defined the internal volume of pneumatic circuit comprised between the first solenoid valve 4 and the second solenoid valve 7, the objective is to use this volume as a small internal reservoir to create the condition of pressure or vacuum. The pressure or vacuum level in the internal volume is reached by activating the first solenoid valve 4 (opening it to allow the passage of air, and subsequently closing it to put pressure on the portion of the circuit between the two solenoid valves). The pipetting apparatus 1 will therefore carry out micro-aspirations/micro-dispensing of liquid, eliminating any variable from the external pressure/vacuum source 3.

More specifically, the following steps are necessary to carry out the aforementioned micro-aspiration operation:
- apply vacuum at the inlet of the pipetting head 6, by means of the source 3,
- open the first solenoid valve 4,
- wait a determined time period to allow the internal volume comprised between the first and second solenoid valve to reach a determined pressure value,
- close the first solenoid valve 4,
- place the pipetting tip 21 in contact with the liquid to be aspirated, and
- open the second solenoid valve 7 for a certain amount of time, in order to allow the liquid aspiration, correlating the signal of the flow sensor 8.

The following steps are necessary to carry out the aforementioned micro-dispensing operation:
- apply a pressure at the inlet of the pipetting head 6, by means of the source 3,
- open the first solenoid valve 4,
- wait a determined time period to allow the internal volume comprised between the first and the second solenoid valve 4,7 to reach a determined pressure value,
- close the first solenoid valve 4,
- place the pipetting tip 21 in contact with the liquid to be dispensed, and
- open the second solenoid valve 7 for a certain amount of time, in order to allow the liquid dispensing, correlating the signal of the flow sensor 8.

As previously indicated, a pressure sensor associated with the described components allows to control the pressure in the internal volume comprised between the two solenoid valves 4,7, during all the steps of the aspiration and dispensing operations.

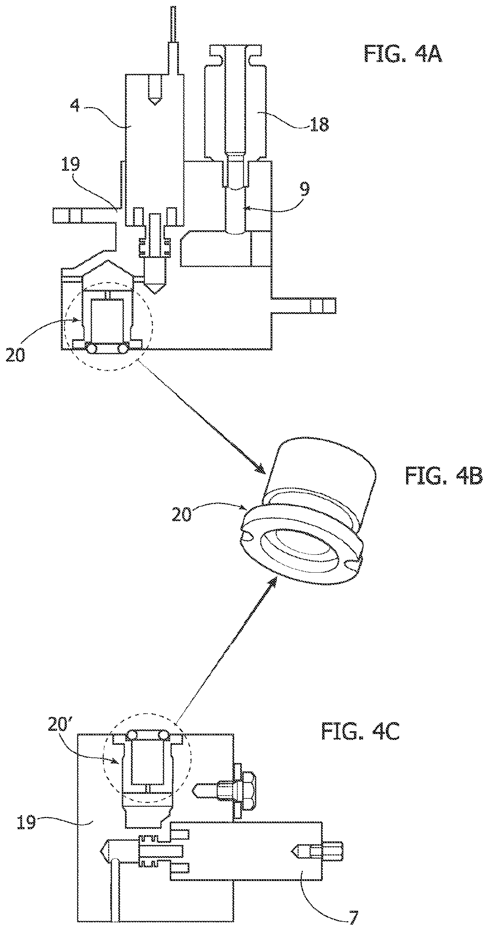

According to the embodiment illustrated in Figures 4A-4C, the pipetting apparatus 1 can comprise a reduction connector 20 positioned along the internal duct 9, in a position proximal and downstream of the first solenoid valve 4 (upstream of the flow sensor 8). The reduction connector 20 may be a bushing which acts as an O-ring to ensure a radial and axial seal. The presence of a connector that creates a constriction within the portion of the pneumatic circuit close to the tip guarantees a damping effect on the air flow profile. The specific configuration chosen (a constriction proximal and downstream of the first solenoid valve 4) allows to implement two different pipetting strategies - impulsive and damped - and at the same time acquire a reliable flow signal, corresponding to that actually present within the tip. In fact, alternative configurations that provide for the constriction being downstream of the flow sensor 8 lead to a loss of such correspondence, since in this case the constriction dampens the air flow only after it has passed through the flow sensor.

The impulsive strategy - which is optimal for dispensing operations - is characterized by the typical peak produced on the flow curve and has the advantage of allowing a more efficient emptying of the liquid contained in the tip.

The strategy with a damped flow curve allows to obtain a more realistic and accurate integration of the flow signal, i.e. regular and without peak, both during the aspiration and the dispensing step.

It should therefore be noted that the electronic controller E is configured and programmed to implement the aforementioned different strategies, according to the specific application.

A second reduction connector 20' can be used in a proximal position and upstream of the second solenoid valve 7, to obtain an optimal internal pressure in the volume of pneumatic circuit comprised between the two solenoid valves 4,7, obtaining a better correlation between the imposed pressure and the measured flow rate of aspirated/dispensed liquid.

Of course, even in the embodiment with two solenoid valves, an air filter 24 can be used to avoid air contamination during the aspiration/dispensing operation.

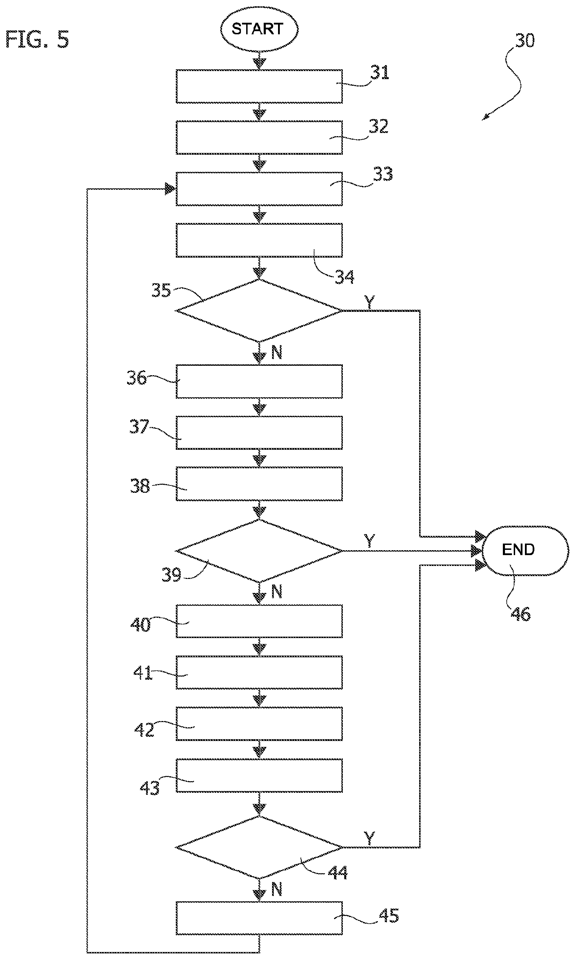

Figure 5 illustrates a flow chart 30 which sets out a process for carrying out a preliminary calibration of an automated pipetting equipment, to improve the accuracy of pipetting operations.

The accuracy of a pipetting apparatus can be defined by combining the following factors:
- the type of liquid to be aspirated/dispensed,
- the capacity of the pipetting tip (i.e. the amount of liquid that the tip can contain) and the type of pipetting tip,
- the amount of liquid to be aspirated/dispensed.

The calibration procedure comprises a step of set up of some operating parameters, which can influence the performance of a flow sensor arranged to read the flow rate of liquid aspirated/dispensed. The operating parameters are:
- the pressure value used to aspirate the liquid (Pₛₑₜ);
- the residual volume (Vᵣₑₛ), i.e. the portion of the aspirated volume after the closure of at least one solenoid valve: once the tip 21 has been disconnected from the vacuum source 3, the pipettor continues, even if for an extremely limited time, to aspirate, and the residual volume is the volume aspirated in this time;
- the vertical position of the pipetting head and the pipetting tip with respect to the liquid level (Z_{sub}).

This set up procedure requires the use of a precision scale and comprises a repetitive execution of the following steps:
- control the pipettor to aspirate a determined amount of liquid ("target volume") with a specific pipetting tip. During this step the pipettor uses - as a first attempt - a set of user-defined operating parameters; as indicated above, the automated pipetting apparatus may comprise an HMI human-machine interface device for setting such parameters;
- for each aspiration, the flow sensor signal measures the flow rate of the aspirated liquid; the quantity of aspirated volume can be identified with a precision scale;
- evaluate the accuracy of the performed aspirations after a measurement of the weight of the aspirated liquid and compare the obtained accuracy with the desired one;
- if the obtained accuracy is acceptable, terminate the calibration procedure. Otherwise, modify at least one of the three aforementioned operating parameters and repeat the procedure.

Even more in detail, as illustrated in the flow chart 30, the calibration procedure involves the following steps:
- reference 31 indicates the step of setting the type of liquid to be aspirated/dispensed, the capacity of the pipetting tip and the quantity of liquid to be aspirated/dispensed;
- reference 32 indicates the step of setting the initial parameters Pₛₑₜ, Vᵣₑₛ and Z_{sub};
- reference 33 indicates the aspiration step;
- reference 34 indicates the step of transferring the aspirated liquid to a precision scale and weighing the aspirated liquid - it should be noted that in one or more embodiments, a precision scale is integrated in the apparatus, so as not to have to complete the transfer to perform the weighing;
- if the accuracy is within a predetermined threshold value (reference 35), the procedure ends (reference 46), otherwise it is necessary to:
   - change the values of Pₛₑₜ, Vᵣₑₛ and Z_{sub} (reference 36);
   - repeat the aforementioned steps of aspiration, weighing and evaluation of the obtained accuracy, as well as that of setting the values of Pₛₑₜ, Vᵣₑₛ and Z_{sub} (blocks indicated with references 37, 38, 39, 40, 41, 42, 43, 44, 45), as long as the accuracy is within a predetermined threshold value.

According to the invention, the calibration procedure described above can be completely automated, by configuring a controller of the apparatus 1 to control according to a predetermined sequence the pipetting means 2, the robotic means 11 and the scale which performs the weighing steps.

Studies and experiences conducted by the Applicant have shown that an automated pipetting apparatus according to the invention allows to obtain high reliability as regards the precision of the pipetting operations and the relative repeatability, as well as an extremely precise control of the volume of liquid aspirated/dispensed, while implementing relatively simple and low cost means.

A further aspect of the invention is illustrated below, related to a diagnostic algorithm that can be implemented with the previously described pipetting apparatus. The algorithm in question acts only for aspiration operations and not for dispensing. Therefore, according to a further feature of the invention, the electronic controller E is configured and programmed to implement a diagnostic procedure to detect any errors that occur during the aspiration process.

The electronic controller E is configured and programmed to detect one or more diagnostic events through the implementation of algorithms that are performed during the aspiration operations performed with the head 6, more particularly during an integration step of the target aspiration volume (online diagnostics) and at the end of aspiration (offline diagnostics).

### Online diagnostics

During aspiration, the electronic controller E of the pipetting equipment is able to online detect two specific error events:
- "Clot": Aspiration of a clot resulting in obstruction of the tip orifice; such event is characterized by a decreasing monotone flow signal;
- "Air Aspiration": event characterized by a pressure signal with a specific operating value.

In case the electronic controller E identifies an error condition, the aspiration operations are automatically interrupted and/or the controller E transmits a warning signal of detected error.

With reference to the "clot" error event, the algorithm is based on the analysis of the flow signal during the single aspiration event, and in particular on the count of occurrences in which the difference between the flow value at an instant of time X and that at an instant of time X + N (N other than 1) is greater than a predefined amount. In order for the error to be detected, this count must exceed a suitable predetermined threshold value.

With reference to the "Air Aspiration" error event, since the flow values during aspirations of air only and liquid only do not differ significantly (in particular when the pipettor works with large volume tips), the implemented algorithm is based on the comparison between the corresponding pressure signals. In fact, during the aspiration step, negative pressures are used to generate the vacuum degree necessary for handling the sample. Based on the fact that, during aspirations of air only, the operating pressure settles to a value corresponding to a lower vacuum level than when liquid is aspirated, the implemented algorithm realizes that air is being aspirated when the pressure curve does not fall below the vacuum values typical of air aspirations.

### Offline diagnostics

At the end of the aspiration operations, on the basis of a processing and analysis step of the signal acquired through the flow sensor 8, the electronic controller E is configured and programmed to process said signal to detect other error events that occurred during aspiration. Specifically, the electronic control E is configured to execute an algorithm to search for one or more sudden variations on the flow signal, due to the transition in the aspiration step from air to liquid and vice versa.

This algorithm has two steps:
- Step 1, "Searching for the stable region of the flow signal". In this step, it is provided a study of the derived flow signal and the definition of a threshold value that identifies the reaching of the operating regime;
- Step 2, "Identification of the error event". In this step, it is provided the calculation of the average flow on a value window that runs along the flow signal curve, between the instant of beginning of the operating regime (defined in Step 1) and the instant of closure of the solenoid valve. The event is detected by comparing the average value just calculated with suitable threshold values (identifying the specific error). More specifically, the algorithm is able to automatically distinguish three different error events:
   - "Air to Liquid Aspiration" ("ALA"): event characterized by a sudden decrease in the flow value, recognized when the value of such signal decreases below a threshold, remaining below it.
   - "Liquid To Air Aspiration" ("LAA"): event characterized by a sudden increase in the flow value, recognized when the value of such signal grows above a threshold, remaining above it.
   - "Foam Aspiration": event characterized by a continuous oscillation of the flow value due to the presence of foam. In this case, the signal cuts both thresholds several times.

It should be noted that the previously described diagnostic algorithms can be implemented by a dedicated electronic unit, in communication with the electronic controller E able to control the pipetting means 2.

Naturally, without prejudice to the principle of the invention, the construction details and the embodiments may vary widely with respect to what is described and illustrated purely by way of example, without thereby departing from the scope of protection of the present invention, as defined in the attached claims.

## Claims

1. Apparatus (1) for the automated pipetting arranged to automatically aspirate, transfer and dispense a liquid, such as a biological sample or a reagent, comprising:
- an air displacement system to aspirate and dispense a determined volume of liquid, including a pneumatic circuit and a pressure and vacuum source (3) arranged to create the pressure necessary to perform a dispensing operation and/or the vacuum condition to perform an aspiration operation of a volume of liquid,
- pipetting means (2) comprising at least one pipetting head (6) connected to said source (3) by means of said pneumatic circuit,
- robotic means (11) arranged to perform a relative displacement between said pipetting means (2) and a container containing the liquid to be aspirated and/or dispensed along at least one direction (Z),
- at least one electronic controller (E) configured to control said pipetting means (2) and said robotic means (11),
- said pipetting head (6) comprising:
- a pipetting tip (21) arranged to contain the aspirated liquid, following the activation of the air displacement system to aspirate and dispense a determined volume of liquid,
- a tip adapter element (15) arranged to support said pipetting tip (21), wherein the tip adapter element (15) comprises an end orifice to allow the air passage necessary for the displacement of the liquid within the pipetting tip (21),
- an internal duct (9) arranged to convey the air displacement generated by said pressure and vacuum source (3), up to the end of the pipetting tip (21), so as to perform the operations of aspiration and dispensing of liquid,
- a first solenoid valve (4) in communication with the internal duct (9), arranged to control the leakage or retention of the air flow introduced by the source (3), said first solenoid valve (4) being in a closed position when said pressure and vacuum source (3) activates,
- a printed circuit board (5) arranged to transmit an electrical command signal for the opening of the first solenoid valve (4),
- a flow sensor (8) arranged to detect the volume of aspirated/dispensed liquid, wherein said flow sensor (8) is a MEMS thermal sensor based on a thermal detection principle which determines the deformation of a temperature profile generated by a heating element, in presence of the air flow generated by the source (3), and detects the temperature gradient in the flow direction, wherein said MEMS thermal sensor is a miniaturized sensor integrated within the pipetting head (6),
- wherein said electronic controller (E) is programmed with retroactive control algorithms, to read the detections of the flow sensor (8), in order to control the closure of the first solenoid valve (4) once a predetermined volume of aspirated or dispensed liquid has been reached,
- said pipetting head (6) further comprising a second solenoid valve (7) arranged downstream of the first solenoid valve (4), near the tip adapter element (15), so as to define a portion of the pneumatic circuit comprised between the first and the second solenoid valve (4, 7).

2. Apparatus (1) according to claim 1, comprising an HMI human-machine interface device, to perform a preliminary programming of the apparatus (1), by entering different operating parameters, such as for example the type of liquid and the volume to be aspirated/dispensed.

3. Apparatus (1) according to claim 1, wherein the second solenoid valve (7) can be switched to aspirate or dispense liquid volumes comprised between 0,5 µl and 2 µl, using said portion of the pneumatic circuit comprised between the first and the second solenoid valve (4,7), which is in pressure or vacuum after the activation of the source (3) and the switching of the first solenoid valve (4), in such a way as to make a pressure-adjustable micro-pump.

4. Apparatus (1) according to claim 3, comprising a pressure sensor arranged to read the pressure that is reached in the volume of the pneumatic circuit comprised between the first and the second solenoid valve (4, 7).

5. Apparatus (1) according to claim 1, comprising a reduction connector (20) positioned along the internal duct (9), in a position proximal and downstream of the first solenoid valve (4), wherein the reduction connector (20) is a sealing bushing to ensure a radial and axial seal, wherein said reduction connector (20) creates a constriction to generate a damping effect on the air flow profile.

6. Apparatus (1) according to claim 5, wherein the electronic controller (E) is configured and programmed to perform different pipetting strategies, in particular pipetting operations which determine a damped flow profile or pipetting operations which determine an impulsive flow profile.

7. Process for automatically aspirating, transferring and dispensing a liquid, such as a biological sample or a reagent, comprising:
- arrange an automated pipetting apparatus (1) according to claim 1,
- activate the pressure and vacuum source (3),
- transmit an electrical command signal to open said first solenoid valve (4),
- make flow an air flow generated by the activation of the source (3), through a first duct (16), an inlet section of the internal duct (9), the first solenoid valve (4), the flow sensor (8) and the tip adapter element (15),
- detect the volume of aspirated or dispensed liquid by means of said flow sensor (8) based on a thermal detection principle which determines the deformation of a temperature profile generated by a heating element, in presence of the air flow generated by the source (3), and detects the temperature gradient in the flow direction,
- transmit an electrical command signal to close said first solenoid valve (4), once a predetermined volume of liquid to be aspirated/dispensed has been reached.

8. Process according to claim 7, comprising:
- apply vacuum at the inlet of the pipetting head (6), by means of the source (3),
- transmit an electrical command signal to open said first solenoid valve (4),
- wait a determined time period to allow the internal volume comprised between the first and the second solenoid valve (4, 7) to reach a determined pressure value,
- transmit an electrical command signal to close said first solenoid valve (4),
- place the pipetting tip (21) in contact with the liquid to be aspirated,
- transmit an electrical command signal to open the second solenoid valve (7), in order to allow the liquid aspiration.

## Patentansprüche

1. Vorrichtung (1) für das automatisierte Pipettieren, eingerichtet, um automatisch eine Flüssigkeit, wie eine biologische Probe oder ein Reagenz, anzusaugen, zu übertragen und zu dosieren, umfassend:
- ein Luftverdrängungssystem zum Ansaugen und Dosieren eines bestimmten Flüssigkeitsvolumens, einschließlich eines pneumatischen Kreislaufs und einer Druck- und Vakuumquelle (3), eingerichtet, den notwendigen Druck zur Durchführung eines Dosiervorgangs und/oder die Vakuumbedingung zur Durchführung eines Ansaugvorgangs eines Flüssigkeitsvolumens zu erzeugen,
- Pipettiermittel (2), umfassend mindestens einen Pipettierkopf (6), der mit genannter Quelle (3) mittels des genannten pneumatischen Kreislaufs verbunden ist,
- robotische Mittel (11), eingerichtet, eine Relativbewegung zwischen genannten Pipettiermitteln (2) und einem Behälter, der die anzusaugende und/oder zu dosierende Flüssigkeit enthält, entlang mindestens einer Richtung (Z) auszuführen,
- mindestens eine elektronische Steuerung (E), konfiguriert, genannte Pipettiermittel (2) und genannten robotischen Mittel (11) zu steuern,
- wobei genannter Pipettierkopf (6) umfasst:
- eine Pipettenspitze (21), eingerichtet, die angesaugte Flüssigkeit zu enthalten, nach Aktivierung des Luftverdrängungssystems zum Ansaugen und Dosieren eines bestimmten Flüssigkeitsvolumens,
- ein Spitzenadapterelement (15), eingerichtet, genannte Pipettenspitze (21) zu tragen, wobei das Spitzenadapterelement (15) eine Endöffnung umfasst, um den Luftdurchgang zu ermöglichen, der für die Verdrängung der Flüssigkeit innerhalb der Pipettenspitze (21) notwendig ist,
- einen internen Kanal (9), eingerichtet, die durch genannte Druck- und Vakuumquelle (3) erzeugte Luftverdrängung bis zum Ende der Pipettenspitze (21) zu leiten, um die Vorgänge des Ansaugens und Dosierens der Flüssigkeit auszuführen,
- ein erstes Magnetventil (4), in Verbindung mit dem internen Kanal (9), eingerichtet, das Entweichen oder Zurückhalten des von der Quelle (3) eingebrachten Luftstroms zu steuern, wobei genanntes erstes Magnetventil (4) in einer geschlossenen Position ist, wenn genannte Druck- und Vakuumquelle (3) aktiviert,
- eine Leiterplatte (5), eingerichtet, ein elektrisches Steuersignal zum Öffnen des ersten Magnetventils (4) zu übertragen,
- einen Durchflusssensor (8), eingerichtet, das Volumen der angesaugten/dosierten Flüssigkeit zu erfassen, wobei genannter Durchflusssensor (8) ein MEMS-Thermalsensor ist, basierend auf einem thermischen Detektionsprinzip, welches die Verformung eines Temperaturprofils bestimmt, das durch ein Heizelement erzeugt wird, in Anwesenheit des durch die Quelle (3) erzeugten Luftstroms, und den Temperaturgradienten in Strömungsrichtung erfasst, wobei genannter MEMS-Thermalsensor ein miniaturisierter Sensor ist, der innerhalb des Pipettierkopfs (6) integriert ist,
- wobei genannte elektronische Steuerung (E) mit rückgekoppelten Regelalgorithmen programmiert ist, um die Erfassungen des Durchflusssensors (8) auszulesen, um das Schließen des ersten Magnetventils (4) zu steuern, sobald ein vorbestimmtes Volumen angesaugter oder dosierter Flüssigkeit erreicht ist,
- wobei genannter Pipettierkopf (6) ferner ein zweites Magnetventil (7) umfasst, angeordnet stromabwärts des ersten Magnetventils (4), nahe dem Spitzenadapterelement (15), um einen Abschnitt des pneumatischen Kreislaufs zu definieren, der zwischen dem ersten und dem zweiten Magnetventil (4, 7) umfasst ist.

2. Vorrichtung (1) nach Anspruch 1, umfassend eine HMI-Mensch-Maschine-Schnittstellenvorrichtung, um eine Vorprogrammierung der Vorrichtung (1) durchzuführen, durch Eingabe verschiedener Betriebsparameter, wie beispielsweise der Flüssigkeitstyp und das anzusaugende/dosierende Volumen.

3. Vorrichtung (1) nach Anspruch 1, wobei das zweite Magnetventil (7) umgeschaltet werden kann, um Flüssigkeitsvolumina zwischen 0,5 µl und 2 µl anzusaugen oder zu dosieren, unter Verwendung genannten Abschnitts des pneumatischen Kreislaufs, der zwischen dem ersten und dem zweiten Magnetventil (4, 7) umfasst ist, der nach Aktivierung der Quelle (3) und dem Umschalten des ersten Magnetventils (4) unter Druck oder Vakuum steht, so dass eine druckeinstellbare Mikropumpe gebildet wird.

4. Vorrichtung (1) nach Anspruch 3, umfassend einen Drucksensor, eingerichtet, den Druck zu erfassen, der in dem Volumen des pneumatischen Kreislaufs erreicht wird, der zwischen dem ersten und dem zweiten Magnetventil (4, 7) umfasst ist.

5. Vorrichtung (1) nach Anspruch 1, umfassend einen Reduktionsverbinder (20), positioniert entlang des internen Kanals (9), in einer Position proximal und stromabwärts des ersten Magnetventils (4), wobei der Reduktionsverbinder (20) eine Dichtbuchse ist, um eine radiale und axiale Abdichtung zu gewährleisten, wobei genannter Reduktionsverbinder (20) eine Verengung erzeugt, um einen Dämpfungseffekt auf das Luftstromprofil zu erzeugen.

6. Vorrichtung (1) nach Anspruch 5, wobei die elektronische Steuerung (E) konfiguriert und programmiert ist, verschiedene Pipettierstrategien auszuführen, insbesondere Pipettieroperationen, die ein gedämpftes Strömungsprofil bestimmen, oder Pipettieroperationen, die ein impulsives Strömungsprofil bestimmen.

7. Verfahren zum automatischen Ansaugen, Übertragen und Dosieren einer Flüssigkeit, wie einer biologischen Probe oder eines Reagenzes, umfassend:
- Bereitstellen einer automatisierten Pipettiervorrichtung (1) nach Anspruch 1,
- Aktivieren der Druck- und Vakuumquelle (3),
- Übertragen eines elektrischen Steuersignals zum Öffnen genannten ersten Magnetventils (4),
- Strömenlassen eines durch die Aktivierung der Quelle (3) erzeugten Luftstroms durch einen ersten Kanal (16), einen Einlassabschnitt des internen Kanals (9), das erste Magnetventil (4), den Durchflusssensor (8) und das Spitzenadapterelement (15),
- Erfassen des Volumens der angesaugten oder dosierten Flüssigkeit mittels genannten Durchflusssensors (8) basierend auf einem thermischen Detektionsprinzip, welches die Verformung eines Temperaturprofils bestimmt, das durch ein Heizelement erzeugt wird, in Anwesenheit des durch die Quelle (3) erzeugten Luftstroms, und den Temperaturgradienten in Strömungsrichtung erfasst,
- Übertragen eines elektrischen Steuersignals zum Schließen genannten ersten Magnetventils (4), sobald ein vorbestimmtes Volumen der anzusaugenden/dosierenden Flüssigkeit erreicht ist.

8. Verfahren nach Anspruch 7, umfassend:
- Anlegen eines Vakuums am Einlass des Pipettierkopfs (6) mittels der Quelle (3),
- Übertragen eines elektrischen Steuersignals zum Öffnen genannten ersten Magnetventils (4),
- Warten eines bestimmten Zeitintervalls, um dem internen Volumen, das zwischen dem ersten und dem zweiten Magnetventil (4, 7) umfasst ist, zu ermöglichen, einen bestimmten Druckwert zu erreichen,
- Übertragen eines elektrischen Steuersignals zum Schließen genannten ersten Magnetventils (4),
- Platzieren der Pipettenspitze (21) in Kontakt mit der anzusaugenden Flüssigkeit,
- Übertragen eines elektrischen Steuersignals zum Öffnen des zweiten Magnetventils (7), um das Ansaugen der Flüssigkeit zu ermöglichen.

## Revendications

1. Appareil (1) pour le pipetage automatisé, configuré pour aspirer, transférer et distribuer automatiquement un liquide, tel qu'un échantillon biologique ou un réactif, comprenant :
- un système de déplacement d'air pour aspirer et distribuer un volume déterminé de liquide, comprenant un circuit pneumatique et une source de pression et de vide (3) configurée pour créer la pression nécessaire pour effectuer une opération de distribution et/ou la condition de vide pour effectuer une opération d'aspiration d'un volume de liquide,
- des moyens de pipetage (2) comprenant au moins une tête de pipetage (6) connectée à ladite source (3) au moyen dudit circuit pneumatique,
- des moyens robotiques (11) configurés pour effectuer un déplacement relatif entre lesdits moyens de pipetage (2) et un récipient contenant le liquide à aspirer et/ou à distribuer le long d'au moins une direction (Z),
- au moins un contrôleur électronique (E) configuré pour commander lesdits moyens de pipetage (2) et lesdits moyens robotiques (11),
- ladite tête de pipetage (6) comprenant :
- une pointe de pipette (21) configurée pour contenir le liquide aspiré, suite à l'activation du système de déplacement d'air pour aspirer et distribuer un volume déterminé de liquide,
- un élément adaptateur de pointe (15) configuré pour supporter ladite pointe de pipette (21), dans lequel l'élément adaptateur de pointe (15) comprend un orifice terminal pour permettre le passage d'air nécessaire au déplacement du liquide à l'intérieur de la pointe de pipette (21),
- un conduit interne (9) configuré pour acheminer le déplacement d'air généré par ladite source de pression et de vide (3), jusqu'à l'extrémité de la pointe de pipette (21), de manière à effectuer les opérations d'aspiration et de distribution du liquide,
- une première électrovanne (4) en communication avec le conduit interne (9), configurée pour contrôler la fuite ou la rétention du flux d'air introduit par la source (3), ladite première électrovanne (4) étant en position fermée lorsque ladite source de pression et de vide (3) s'active,
- une carte de circuit imprimé (5) configurée pour transmettre un signal de commande électrique pour l'ouverture de la première électrovanne (4),
- un capteur de débit (8) configuré pour détecter le volume de liquide aspiré/distribué, dans lequel ledit capteur de débit (8) est un capteur thermique MEMS basé sur un principe de détection thermique qui détermine la déformation d'un profil de température généré par un élément chauffant, en présence du flux d'air généré par la source (3), et détecte le gradient de température dans la direction d'écoulement, dans lequel ledit capteur thermique MEMS est un capteur miniaturisé intégré à l'intérieur de la tête de pipetage (6),
- dans lequel ledit contrôleur électronique (E) est programmé avec des algorithmes de contrôle rétroactif, pour lire les détections du capteur de débit (8), afin de contrôler la fermeture de la première électrovanne (4) une fois qu'un volume prédéterminé de liquide aspiré ou distribué a été atteint,
- ladite tête de pipetage (6) comprenant en outre une seconde électrovanne (7) disposée en aval de la première électrovanne (4), à proximité de l'élément adaptateur de pointe (15), de manière à définir une portion du circuit pneumatique comprise entre la première et la seconde électrovanne (4, 7).

2. Appareil (1) selon la revendication 1, comprenant un dispositif d'interface homme-machine HMI, pour effectuer une programmation préliminaire de l'appareil (1), en entrant différents paramètres de fonctionnement, tels que par exemple le type de liquide et le volume à aspirer/distribuer.

3. Appareil (1) selon la revendication 1, dans lequel la seconde électrovanne (7) peut être commutée pour aspirer ou distribuer des volumes de liquide compris entre 0,5 µl et 2 µI, en utilisant ladite portion du circuit pneumatique comprise entre la première et la seconde électrovanne (4, 7), qui est en pression ou en vide après l'activation de la source (3) et la commutation de la première électrovanne (4), de manière à réaliser une micro-pompe à pression réglable.

4. Appareil (1) selon la revendication 3, comprenant un capteur de pression configuré pour lire la pression atteinte dans le volume du circuit pneumatique compris entre la première et la seconde électrovanne (4, 7).

5. Appareil (1) selon la revendication 1, comprenant un connecteur de réduction (20) positionné le long du conduit interne (9), dans une position proximale et en aval de la première électrovanne (4), dans lequel le connecteur de réduction (20) est une bague d'étanchéité pour assurer une étanchéité radiale et axiale, dans lequel ledit connecteur de réduction (20) crée un rétrécissement pour générer un effet d'amortissement sur le profil du flux d'air.

6. Appareil (1) selon la revendication 5, dans lequel le contrôleur électronique (E) est configuré et programmé pour effectuer différentes stratégies de pipetage, en particulier des opérations de pipetage qui déterminent un profil d'écoulement amorti ou des opérations de pipetage qui déterminent un profil d'écoulement impulsif.

7. Procédé pour aspirer, transférer et distribuer automatiquement un liquide, tel qu'un échantillon biologique ou un réactif, comprenant :
- disposer un appareil de pipetage automatisé (1) selon la revendication 1,
- activer la source de pression et de vide (3),
- transmettre un signal de commande électrique pour ouvrir ladite première électrovanne (4),
- faire circuler un flux d'air généré par l'activation de la source (3), à travers un premier conduit (16), une section d'entrée du conduit interne (9), la première électrovanne (4), le capteur de débit (8) et l'élément adaptateur de pointe (15),
- détecter le volume de liquide aspiré ou distribué au moyen dudit capteur de débit (8) basé sur un principe de détection thermique qui détermine la déformation d'un profil de température généré par un élément chauffant, en présence du flux d'air généré par la source (3), et détecte le gradient de température dans la direction d'écoulement,
- transmettre un signal de commande électrique pour fermer ladite première électrovanne (4), une fois qu'un volume prédéterminé de liquide à aspirer/distribuer a été atteint.

8. Procédé selon la revendication 7, comprenant :
- appliquer un vide à l'entrée de la tête de pipetage (6), au moyen de la source (3),
- transmettre un signal de commande électrique pour ouvrir ladite première électrovanne (4),
- attendre une période de temps déterminée pour permettre au volume interne compris entre la première et la seconde électrovanne (4, 7) d'atteindre une valeur de pression déterminée,
- transmettre un signal de commande électrique pour fermer ladite première électrovanne (4),
- placer la pointe de pipette (21) en contact avec le liquide à aspirer,
- transmettre un signal de commande électrique pour ouvrir la seconde électrovanne (7), afin de permettre l'aspiration du liquide.
